# EUROPÄISCHE PATENTSCHRIFT

(11) **EP 1 262 800 B1**
(45) Veröffentlichungstag und Bekanntmachung des Hinweises auf die Patenterteilung: **08.08.2007**
(21) Anmeldenummer: 02010079.8
(22) Anmeldetag: 06.05.2002
(51) Int. Cl.: G01V 8/22

(54) **Optoelektronischer Sensor**
Optoelectronic sensor
Capteur optoélectronique

(30) Priorität: 29.05.2001 DE 10126086
(43) Veröffentlichungstag der Anmeldung: 04.12.2002
(73) Patentinhaber: SICK AG, 79183 Waldkirch (DE)
(72) Erfinder: Pastor, Sebastian, 79108 Freiburg (DE); Pierenkemper, Hans-Werner, 79312 Emmendingen (DE)
(74) Vertreter: Manitz, Finsterwald & Partner GbR

(56) Entgegenhaltungen:
- EP-A- 0 786 734
- DE-A- 4 431 922
- DE-A- 19 520 993
- DE-A- 19 727 459
- US-A- 4 920 255
- US-A- 5 365 597
- US-A- 5 510 603
- US-A- 6 061 645
- PATENT ABSTRACTS OF JAPAN Bd. 010, Nr. 119 (P-453), 6. Mai 1986 (1986-05-06) & JP 60 247105 A (MITSUBISHI DENKI KK), 6. Dezember 1985 (1985-12-06)

## Beschreibung

Die Erfindung betrifft einen optoelektronischen Sensor mit einer Sendeeinrichtung zum Aussenden einer Linienbeleuchtung in Richtung eines Objektbereichs, einer Empfangseinrichtung zum Empfang von aus dem Objektbereich reflektiertem oder remittiertem Licht und zur Abgabe wenigstens eines entsprechenden Empfangssignals, und einer Auswerteeinrichtung zur Auswertung des wenigstens einen Empfangssignals, gemäß dem Oberbegriff des Anspruchs 1.

Derartige Sensoren dienen im weitesten Sinne zur Bilderkennung, also beispielsweise zur Detektion oder Identifizierung eines Objekts, oder zur Erkennung der Position, der Drehlage, einer Beschriftung oder einer Markierung eines Objekts.

Hierfür wird der Objektbereich mit einer Linienbeleuchtung beaufschlagt, also mit einem oder mehreren Lichtstrahlen, die gemeinsam einen linienförmigen oder zumindest länglichen Querschnitt besitzen. Durch eine solche Linienbeleuchtung wird also ein eng begrenzter Raumwinkel mit einer vergleichsweise hohen Lichtintensität beleuchtet, so daß ein auf bekannte Weise einfaches zeilenweises Abtasten eines Objekts möglich ist. Zur Realisierung einer derartigen Linienbeleuchtung ist beispielsweise eine periodische Strahlablenkung eines Laserstrahls bekannt.

Nachteilig an den bekannten Sensoren ist, daß ihr Schärfentiefebereich zu gering ist, um für unterschiedliche Objektabstände die für manche Anwendungen erforderliche Genauigkeit der Bilderkennung zu gewährleisten.

Aus der US-A-6,061,645 ist ein Laserscanner bekannt, bei dem zugleich ein optischer Code gelesen und eine Distanzinformation ermittelt werden, wobei mehrere Messpunkte berücksichtigt werden.

Die EP-A-0 786 734 beschreibt einen Laserscanner zum Lesen eines Barcodes, bei dem zugleich der Abstand zu dem den Barcode tragenden Objekt ermittelt und eine Fokussiereinrichtung entsprechend verstellt werden kann.

Die DE-A-44 31 922 beschreibt ein Lichtschnitt-Triangulations-Verfahren, bei dem eine CCD-Kamera verwendet wird.

Es ist eine Aufgabe der Erfindung, einen Sensor zu schaffen, dessen Schärfentiefebereich auf einfache Weise unterschiedlichen Anwendungen bzw. Objektabständen angepaßt werden kann.

Diese Aufgabe wird durch einen Sensor mit den Merkmalen des Anspruchs 1 gelöst.

Bei der Erfindung wird also der Abstand zwischen dem Sensor und einem Objekt innerhalb des Objektbereichs bestimmt. Mit Hilfe dieser Abstandsinformation kann eine Verstelleinrichtung dazu verwendet werden, die Fokuslage des Sensors auf den gemessenen Abstand einzustellen bzw. ständig nachzuführen (Autofokusfunktion).

Wichtig ist, daß die Linienbeleuchtung - durch entsprechende Untergliederung der Sendeeinrichtung und/oder der Empfangseinrichtung - in mehrere Überwachungssegmente unterteilt ist, und daß die Abstandsinformation segmentweise ermittelt wird, also für ein einziges dieser Überwachungssegmente, oder jeweils für mehrere Überwachungssegmente.

Diese Unterteilung hat den Vorteil, daß auch für ein Objekt mit ungleichmäßiger Ausdehnung entlang der Linienbeleuchtung eine eindeutige Abstandsinformation für das jeweilige Segment gewonnen werden kann, was hingegen für eine einheitliche Abstandsmessung entlang des gesamten linienbeleuchteten Objektbereichs für beispielsweise ein geneigtes Objekt nicht ohne weiteres möglich ist.

Die erfindungsgemäße Abstandsbestimmung für einzelne Überwachungssegmente bringt somit letztlich den Vorteil, daß keine aufwendige externe Abstandsmeßeinrichtung erforderlich ist. Vielmehr kann die Abstandsmeßeinrichtung in den Sensor integriert sein, wobei Bauelemente des Sensors, die für die Bilderfassung ohnehin erforderlich sind, gleichzeitig für die Abstandsmessung verwendet werden können. Insbesondere kann die für die Ermittlung einer Bildzeile vorgesehene Linienbeleuchtung auch für die Abstandsbestimmung innerhalb der Abstandsmeßeinrichtung verwendet werden.

Zu der Erfindung ist noch anzumerken, daß für das Sende- und das Empfangslicht auch der Infrarot- oder der Ultraviolett-Bereich geeignet sind.

Für die Realisierung der Unterteilung der Linienbeleuchtung ist vorgesehen, dass, die Sendeeinrichtung für jedes Überwachungssegment ein zugeordnetes Sendeelement, insbesondere mit jeweils eigener Sendeoptik besitzt. Hierdurch ist es besonders einfach, für jedes Überwachungssegment beispielsweise nach einem Phasen- bzw. Frequenzauswerteverfahren jeweils den Abstand zu bestimmen. Als Sendeelemente kommen beispielsweise eine Laserdiode oder eine LED in Frage.

Je nach dem verwendeten Abstandsmeßprinzip kann eine einzige Empfangseinrichtung für die Gewinnung der Bild- und der Abstandsinformation vorgesehen sein, oder der Sensor weist neben der - für die eigentlichen Sensorzwecke vorgesehenen - Empfangseinrichtung eine zusätzliche Empfangseinrichtung auf, deren Empfangssignal für die Abstandsbestimmung herangezogen wird.

Die Empfangseinrichtung bzw. die zusätzliche Empfangseinrichtung kann hinsichtlich der mehreren Überwachungssegmente ortsauflösend ausgebildet sein. Insbesondere kann sie, wie bereits erwähnt, mehrere jeweils zugeordnete Empfangselemente besitzen. In diesem Fall wird eine entsprechende Anzahl von Empfangssignalen bzw. zusätzlichen Empfangssignalen erzeugt.

Alternativ ist es möglich, daß ein einziges Empfangselement, beispielsweise eine PIN-Diode oder eine Lawinenphotodiode, in Verbindung mit einer astigmatischen Empfangsoptik vorgesehen ist.

Zusammenfassend können die Unterteilung der Linienbeleuchtung in Überwachungssegmente sowie die Erzeugung einer auf ein jeweiliges Überwachungssegment bezogenen Abstandsinformation entweder durch eine entsprechende Unterteilung der Sendeeinrichtung, oder eine Kombination eines entsprechenden Unterteilung der Sendeeinrichtung mit eines entsprechenden Unterteilung der Empfangseinrichtung verwirklicht werden.

Die eigentliche Abstandsbestimmung erfolgt zumindest für ein einziges Überwachungssegment. Beispielsweise kann dieses spezielle Segment in einer Anwendung, bei der sich die Linienbeleuchtung quer zu der Transportrichtung eines Transportbandes mit darauf befindlichen, zu erfassenden Objekten erstreckt, in einer zentralen Anordnung vorgesehen sein, also über der Mitte dieser Transportbandes.

Allerdings sind auch Anwendungen möglich, bei denen weitergehende Abstandsinformationen wünschenswert sind. Beispielsweise kann es von Vorteil sein, für Objekte mit ungleichmäßiger Kontur ein Abstandsprofil zu bestimmen, um die Fokuslage des Sensors für einen Mittelwert der gemessenen Abstände einzustellen. Außerdem kann es wünschenswert sein, aus mehreren Abstandswerten das Volumen eines im Objektbereich befindlichen oder diesen passierenden Objekts zu berechnen oder zumindest abzuschätzen. Für derartige Fälle ist es bevorzugt, wenn die Abstandsmeßeinrichtung zur Abstandsbestimmung für mehrere, insbesondere für alle Überwachungssegmente ausgebildet ist. Mit anderen Worten kann für jedes Überwachungssegment ein eigenes Empfangssignal vorgesehen sein, das innerhalb der Abstandsmeßeinrichtung zur Bestimmung des Objektabstands für das betreffende Segment herangezogen wird.

Falls die Abstandsbestimmung für mehrere Überwachungssegmente vorgesehen ist, kann diese für die mehreren Segmente sequentiell oder parallel erfolgen. Im erstgenannten Fall werden die Überwachungssegmente über die entsprechenden Sendeelemente bzw. Empfangselemente beispielsweise mittels eines Multiplexers nacheinander aktiviert. Auf diese Weise wird ein Großteil der sensorinteren Abstandsmeßeinrichtung für die betreffenden Überwachungssegmente gemeinsam genutzt, was den baulichen Aufwand noch weiter reduziert. Demgegenüber besitzt eine für die mehreren Überwachungssegmente parallel erfolgende Abstandsbestimmung den Vorteil einer Zeitersparnis, was insbesondere bei schneller Relativbewegung des zu erfassenden Objekts von Bedeutung sein kann.

Als Meßprinzip kann der Abstandsbestimmung, wie bereits erwähnt, ein Phasen- bzw. Frequenzauswerteverfahren zugrundegelegt werden, also ein Dauerstrichverfahren, bei dem letztlich eine entlang des Objektabstands erfolgende Phasenverschiebung gemessen wird. Beispielsweise kann die Abstandsmeßeinrichtung zu diesem Zweck einen Filterbaustein aufweisen, der gemeinsam mit der optischen Wegstrecke, der Sendeeinrichtung und der Empfangseinrichtung bzw. einzelner Elemente hiervon einen Resonanzkreis bildet. Es ist auch möglich, sendeseitig einen Oszillator und empfangsseitig einen Phasenkomparator vorzusehen.

Außerdem ist zu den - insbesondere durch einzelne Sendeelemente definierten - Überwachungssegmenten anzumerken, daß diese senkrecht zur optischen Achse der Sendeeinrichtung vorzugsweise benachbart zueinander angeordnet sind, entsprechend der Erstreckungsrichtung der Linienbeleuchtung. Hierbei können die Überwachungssegmente bzw. die entsprechenden Segmente der Linienbeleuchtung jeweils aneinander angrenzen, geringfügig voneinander beabstandet sein oder geringfügig überlappen. Hinsichtlich der Hauptfunktion des Sensors der Bilderfassung entlang der Linienbeleuchtung ist von Vorteil, wenn diese Linienbeleuchtung - trotz der Unterteilung in Segmente - möglichst homogen ausgebildet ist.

Vorzugsweise ist der linienbeleuchtete Objektbereich - aufgrund einer entsprechenden Anzahl von Sendeelementen und/oder Empfangselementen - in eine Vielzahl von Überwachungssegmenten unterteilt. Dadurch wird eine vorteilhaft hohe Auflösung der Abstandsinformation entlang der Erstreckungsrichtung der Linienbeleuchtung erzielt. Insbesondere können wenigstens drei Segmente vorgesehen sein, nämlich ein zentrales und zwei äußere Segmente.

Weitere Ausführungsformen der Erfindung sind in den Unteransprüchen genannt.

Die Erfindung wird nachfolgend beispielhaft unter Bezugnahme auf die Zeichnungen näher erläutert; in diesen zeigen:
- Fig. 1: eine schematische Frontansicht eines Bildverarbeitungssystems mit einem erfindungsgemäßen Sensor und einem darunter angeordneten Transportband, auf dem sich ein zu erfassendes Objekt befindet, und
- Fig. 2: eine Draufsicht dieses Transportbandes.

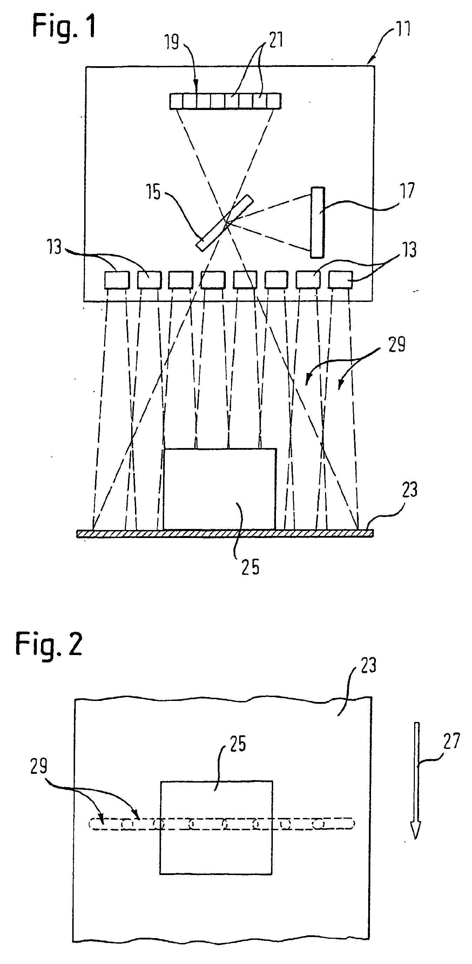

In Fig. 1 dargestellt ist ein Sensor 11 mit acht Sendeelementen 13, beispielsweise Laserdioden, ferner mit einem Strahlteiler 15, einer beispielsweise durch einen CCD-Sensor gebildeten Empfangseinrichtung 17 sowie mit einer zusätzlichen Empfangseinrichtung 19, die beispielsweise durch eine Photoempfängerzeile gebildet ist und acht Empfangselemente 21 aufweist.

Unterhalb des Sensors 11 ist ein Transportband 23 angeordnet, das gemeinsam mit dem Sensor 11 ein Bildverarbeitungssystem bildet und auf dem sich ein zu erfassendes Paket 25 befindet. Das Transportband 23 kann entlang einer in Fig. 2 gezeigten Transportrichtung 27 bewegt werden.

Die Sendeelemente 13 sind mit einer - nicht dargestellten - Blendenoptik ausgestattet, um jeweils ein Lichtstrahlbündel in Richtung des Transportbandes 23 aussenden, das einen ovalen Querschnitt besitzt und ein Überwachungssegment 29 definiert.

Wie aus der Draufsicht gemäß Fig. 2 ersichtlich, sind die Überwachungssegmente 29 bzw. die entsprechenden Lichtflecke auf dem Transportband 23 bzw. dem Paket 25 entlang der Längsrichtung ihres jeweiligen ovalen Querschnitts linear angeordnet, und sie überlappen geringfügig. Diese lineare Anordnung erstreckt sich parallel zu der linearen Anordnung der Sendeelemente 13 und senkrecht zu der Transportrichtung 27. Die von den Sendeelementen 13 gemäß den Überwachungssegmenten 29 ausgesandten Sendelichtbündel bilden somit eine Linienbeleuchtung des Transportbandes 23 bzw. des darauf befindlichen Pakets 25.

### Der Sensor 11 funktioniert wie folgt:

Das von den Sendeelementen 13 gemäß der erläuterten Linienbeleuchtung bzw. der Überwachungssegmente 29 ausgesandte Licht wird von dem Transportband 23 bzw. dem Paket 25 reflektiert oder remittiert und über eine - nicht dargestellte - Empfangsoptik sowie über den Strahlteiler 15 auf die Empfangseinrichtung 17 abgebildet. Diese gibt entsprechende Empfangssignale an eine - ebenfalls nicht dargestellte - Auswerteeinrichtung weiter.

Indem das Transportband 23 und somit auch das Paket 25 kontinuierlich entlang der Transportrichtung 27 bewegt werden und der Auswerteeinrichtung ein entsprechendes Synchronisationssignal übermittelt wird, kann die Auswerteeinrichtung durch zeilenweises Abtasten des Transportbandes 23 und des Pakets 25 ein zweidimensionales Bild erfassen und errechnen, um beispielsweise die Position des Pakets 25 zu detektieren oder eine darauf angebrachte Codierung einzulesen und zu analysieren. Mit anderen Worten wird durch periodisches Erfassen des bewegten und linienbeleuchteten Transportbandes 23 und Pakets 25 eine Bildinformation zusammengesetzt.

Das reflektierte bzw. remittierte Licht der Überwachungssegmente 29 der Linienbeleuchtung wird außerdem auf jeweils zugeordnete Empfangselemente 21 der zusätzlichen Empfangseinrichtung 19 abgebildet. Jedes Empfangselement 21 kann über einen - nicht dargestellten - Multiplexer mit dem zugeordneten Sendeelement 13 sowie einem Filterbaustein zeitweise verbunden werden, um einen Resonanzkreis zu bilden. Die Auswerteeinrichtung mißt die Resonanzfrequenz dieses Resonanzkreises, die wiederum eine Information über die Phasenverschiebung des jeweils ausgesandten und reflektierten bzw. remittierten Lichts und somit eine Information des Abstands des Transportbandes 23 bzw. des Pakets 25 vom Sensor 11 liefert. Die Auswerteeinrichtung fungiert somit, gemeinsam mit dem jeweiligen Sendeelement 13, Empfangselement 21 und dem Filterbaustein, als Abstandsmeßeinrichtung.

Die derartig gewonnene Abstandsinformation wird im Sensor 11 dazu verwendet, die Fokuslage der für die eigentliche Bilderfassung vorgesehenen Empfangseinrichtung 17 kontinuierlich anzupassen, also gemäß der Höhe des Pakets 25 oder gemäß anderer durch die Linienbeleuchtung hindurchbewegter Objekte nachzuführen. Zu diesem Zweck ist für die Empfangsoptik eine - nicht dargestellte - Verstelleinrichtung vorgesehen, die durch die Auswerteeinrichtung gesteuert wird.

Ein besonderer Vorteil des Sensors 11 besteht darin, daß die Sendeelemente 13 und die Auswerteeinrichtung nicht nur für die eigentliche Bilderfassung, sondern gleichzeitig auch für die Abstandsbestimmung benutzt werden, die das erläuterte Nachstellen der Fokuslage ermöglicht.

Zu dem Sensor 11 ist noch anzumerken, daß eines der Sendeelemente 13 oder ein weiteres Sendeelement dazu vorgesehen sein kann, einen weiteren Sendelichtstrahl in Richtung eines - nicht dargestellten - Referenzobjekts innerhalb des Sensors 11 auszusenden, welches mittels der Empfangseinrichtung 17, der zusätzlichen Empfangseinrichtung 19 oder eines eigenen Referenzempfangselements detektiert wird. Ein hieraus erzeugtes Signal kann als Referenzwert verwendet werden, um Änderungen der Kalibrierungsbedingungen, die beispielsweise durch Alterungs- oder Temperatureffekte verursacht sein können, erfassen und berücksichtigen zu können. Eine derartige Referenzmessung kann bei jeder Messung einer Zeile von Überwachungssegmenten 29 oder in regelmäßigen Zeitintervallen durchgeführt werden, wobei das jeweilige Referenzsignal beispielsweise über den genannten Multiplexer der Auswerteeinrichtung zugeführt werden kann.

Ferner ist anzumerken, daß auch mehrere Zeilen von Sendeelementen 13 und/oder Empfangselementen 21 bezüglich der Transportrichtung 27 hintereinander angeordnet sein können, so daß mehrere parallele Linearanordnungen von Überwachungssegmenten 29 erzeugt bzw. erfaßt werden.

### Bezugszeichenliste

- 11: Sensor
- 13: Sendeelement
- 15: Strahlteiler
- 17: Empfangseinrichtung
- 19: zusätzliche Empfangseinrichtung
- 21: Empfangselement
- 23: Transportband
- 25: Paket
- 27: Transportrichtung
- 29: Überwachungssegment

## Patentansprüche

1. Optoelektronischer Sensor,
mit einer Sendeeinrichtung (13) zum Aussenden einer Linienbeleuchtung in Richtung eines Objektbereichs,
wenigstens einer Empfangseinrichtung (17, 19) zum Empfang von aus dem Objektbereich reflektiertem oder remittiertem Licht und zur Abgabe wenigstens eines entsprechenden Empfangssignals, und
einer Auswerteeinrichtung zur Auswertung des wenigstens einen Empfangssignals,
wobei eine Unterteilung des linienbeleuchteten Objektbereichs in mehrere Überwachungssegmente (29) vorgesehen ist, und
wobei eine Abstandsmeßeinrichtung vorgesehen ist, durch die für jedes der mehreren Überwachungssegmente (29) der Abstand zu einem darin befindlichen Objekt (23, 25) bestimmbar ist
**dadurch gekennzeichnet,**
**daß** für die Unterteilung des linienbeleuchteten Objektbereichs in die mehreren Überwachungssegmente (29) und für die Bestimmung der auf ein jeweiliges Überwachungssegment (29) bezogenen Abstandsinformation die Sendeeinrichtung für die mehreren Überwachungssegmente jeweils ein zugeordnetes Sendeelement (13) aufweist.

2. Sensor nach Anspruch 1,
**dadurch gekennzeichnet,**
**daß** die Fokuslage einer Empfangsoptik und/oder einer Sendeoptik in Abhängigkeit von einem für ein Überwachungssegment (29) gemessenen Abstand einstellbar ist.

3. Sensor nach einem der vorangehenden Ansprüche,
**dadurch gekennzeichnet,**
**daß** eine zusätzliche Empfangseinrichtung (19) zum Empfang von aus dem Objektbereich reflektiertem oder remittiertem Licht und zur Abgabe wenigstens eines entsprechenden Empfangssignals vorgesehen ist.

4. Sensor nach Anspruch 3,
**dadurch gekennzeichnet,**
**daß** ein empfangsseitiger Strahlteiler (15) vorgesehen ist, der einen Teil des aus dem Objektbereich reflektierten oder remittierten Lichts auf die Empfangseinrichtung (17) und einen anderen Teil auf die zusätzliche Empfangseinrichtung (19) abbildet.

5. Sensor nach einem der Ansprüche 3 oder 4,
**dadurch gekennzeichnet,**
**daß** für die Empfangseinrichtung (17) und die zusätzliche Empfangseinrichtung (19) eine einzige Sendeeinrichtung (13) zum Aussenden einer gemeinsamen Linienbeleuchtung vorgesehen ist.

6. Sensor nach einem der Ansprüche 3 bis 5,
**dadurch gekennzeichnet,**
**daß** die Empfangseinrichtung (17) zur Bilderfassung vorgesehen ist und der Abstand aus dem wenigstens einen Empfangssignal der zusätzlichen Empfangseinrichtung (19) bestimmbar ist.

7. Sensor nach einem der Ansprüche 3 bis 6,
**dadurch gekennzeichnet,**
**daß** die zusätzliche Empfangseinrichtung (19) ortsauflösend ausgebildet ist, insbesondere mit mehreren, den Überwachungssegmenten (29) jeweils zugeordneten Empfangselementen (21).

8. Sensor nach einem der Ansprüche 3 bis 6,
**dadurch gekennzeichnet,**
**daß** eine astigmatische Empfangsoptik vorgesehen ist und die zusätzliche Empfangseinrichtung ein einziges Empfangselement aufweist.

9. Sensor nach einem der vorangehenden Ansprüche,
**dadurch gekennzeichnet,**
**daß** die Empfangseinrichtung (17) ortsauflösend ausgebildet ist, insbesondere mit mehreren, den Überwachungssegmenten jeweils zugeordneten Empfangselementen.

10. Sensor nach einem der vorangehenden Ansprüche,
**dadurch gekennzeichnet,**
**daß** die Abstandsbestimmung für die mehreren Überwachungssegmente (29) sequentiell oder parallel vorgesehen ist.

11. Sensor nach einem der vorangehenden Ansprüche,
**dadurch gekennzeichnet,**
**daß** zur Abstandsbestimmung eine Amplitudenmodulation der Sendeeinrichtung oder einzelner Sendeelemente (13) vorgesehen ist.

12. Sensor nach Anspruch 11,
**dadurch gekennzeichnet,**
**daß** ein Filterbaustein zur Bildung eines Resonanzkreises gemeinsam mit der Sendeeinrichtung (13) und der Empfangseinrichtung bzw. der zusätzlichen Empfangseinrichtung (19) vorgesehen ist, oder daß ein Oszillator und ein Phasenkomparator vorgesehen sind.

13. Sensor nach einem der vorangehenden Ansprüche,
**dadurch gekennzeichnet,**
**daß** die Überwachungssegmente (29) senkrecht zur optischen Achse der Sendeeinrichtung (13) benachbart zueinander angeordnet sind, insbesondere getrennt voneinander, aneinander angrenzend oder überlappend.

14. Sensor nach einem der vorangehenden Ansprüche,
**dadurch gekennzeichnet,**
**daß** die Überwachungssegmente (29) innerhalb einer Ebene senkrecht zur optischen Achse der Sendeeinrichtung (13) eine Längsform besitzen, wobei die Überwachungssegmente (29) vorzugsweise entlang ihrer Längsform benachbart zueinander angeordnet sind.

15. Sensor nach einem der vorangehenden Ansprüche,
**dadurch gekennzeichnet,**
**daß** die Auswerteeinrichtung zur Berechnung einer Bildinformation aus den den Überwachungssegmenten (29) entsprechenden Empfangssignalen ausgebildet ist, und/oder
**daß** die Auswerteeinrichtung zur Berechnung oder Abschätzung des Volumens eines im Objektbereich befindlichen Objekts (25) aus den den Überwachungssegmenten (29) entsprechenden Empfangssignalen ausgebildet ist.

16. Sensor nach einem der vorangehenden Ansprüche,
**dadurch gekennzeichnet,**
**daß** eine Unterteilung des linienbeleuchteten Objektbereichs in eine Vielzahl von Überwachungssegmenten (29), insbesondere in wenigstens drei Überwachungssegmente (29) vorgesehen ist.

17. Sensor nach einem der vorangehenden Ansprüche,
**dadurch gekennzeichnet,**
**daß** die Sendeeinrichtung (13) ein Sendeelement aufweist, durch das ein Sendelichtstrahl in Richtung eines Referenzobjekts innerhalb des Sensors aussendbar ist, wobei durch die Empfangseinrichtung (17) bzw. die zusätzliche Empfangseinrichtung (19) oder ein Referenzempfangselement ein Referenzsignal in Abhängigkeit von vom Referenzobjekt reflektiertem oder remittiertem Licht erzeugbar ist.

## Claims

1. An optoelectronic sensor,
comprising a transmission device (13) for transmitting a strip illumination in the direction of an object zone;
at least one reception device (17, 19) for receiving light reflected or remitted from the object zone and for outputting at least one corresponding reception signal; and
an evaluation device for evaluating the at least one reception signal, wherein a division of the strip illuminated object zone into a plurality of monitoring segments (29) is provided; and
wherein a distance measuring device is provided by which, for each of the plurality of monitoring segments (29), the distance to an object (23, 25) disposed therein can be determined,
**characterized in that**
the transmission device has an associated transmission element (13) for each of the plurality of monitoring segments (29) for the division of the strip illuminated object zone into the plurality of monitoring segments (29) and for the determination of the distance information with regard to a respective monitoring segment (29).

2. A sensor in accordance with claim 1, **characterized in that** the focus position of an optical reception system and/or of an optical transmission system can be set in dependence on a distance measured for a monitoring segment (29).

3. A sensor in accordance with any one of the preceding claims, **characterized in that** an additional reception device (19) is provided for the reception of light reflected or remitted from the object zone and for outputting at least one corresponding reception signal.

4. A sensor in accordance with claim 3, **characterized in that** a beam splitter (15) is provided at the reception side which images one part of the light reflected or remitted from the object zone onto the reception device (17) and another part onto the additional reception device (19).

5. A sensor in accordance with claim 3 or claim 4, **characterized in that** a single transmission device (13) is provided for the reception device (17) and for the additional reception device (19) for the transmission of a common strip illumination.

6. A sensor in accordance with any one of the claims 3 to 5, **characterized in that** the reception device (17) is provided for the image detection and the distance can be determined from the at least one reception signal of the additional receiving device (19).

7. A sensor in accordance with any one of the claims 3 to 5, **characterized in that** the additional reception device (19) is made spatially resolving, in particular with a plurality of receiver elements (21) respectively associated with the monitoring segments (29).

8. A sensor in accordance with any one of the claims 3 to 6, **characterized in that** an astigmatic optical reception system is provided and the additional reception device has a single reception element.

9. A sensor in accordance with any one of the preceding claims, **characterized in that** the reception device (17) is made spatially resolving, in particular with a plurality of receiver elements respectively associated with the monitoring segments.

10. A sensor in accordance with any one of the preceding claims, **characterized in that** the distance determination is provided sequentially or in parallel for the plurality of monitoring segments (29).

11. A sensor in accordance with any one of the preceding claims, **characterized in that**, for the distance determination, an amplitude modulation of the transmission device or of individual transmission elements (13) is provided.

12. A sensor in accordance with any one of the preceding claims, **characterized in that** a filter module is provided for the formation of a resonant circuit together with the transmission device (13) and with the reception device and/or with the additional reception device (19); or **in that** an oscillator and a phase comparator are provided.

13. A sensor in accordance with any one of the preceding claims, **characterized in that** the monitoring segments (29) are arranged perpendicular to the optical axis of the transmission device, (13) adjacent to one another, in particular separately from one another, adjoining one another or overlapping.

14. A sensor in accordance with any one of the preceding claims, **characterized in that** the monitoring segments (29) have an elongate form within a plane perpendicular to the optical axis of the transmission device (13), with the monitoring segments (29) preferably being arranged adjacent to one another along their elongate form.

15. A sensor in accordance with any one of the preceding claims, **characterized in that** the evaluation device is designed to calculate image information from the reception signals corresponding to the monitoring segments (29); and/or **in that** the evaluation unit is designed to calculate or estimate the volume of an object (25) disposed in the object zone from the reception signals corresponding to the monitoring segments (29).

16. A sensor in accordance with any one of the preceding claims, **characterized in that** a division of the strip illuminated object zone into a plurality of monitoring segments (29), in particular into at least three monitoring segments (29), is provided.

17. A sensor in accordance with any one of the preceding claims, **characterized in that** the transmission device (13) has a transmission element through which a transmitted light ray can be transmitted in the direction of a reference object inside the sensor, with a reference signal being able to be produced in dependence on light reflected or remitted by the reference object by the reception device (17) and/or by the additional reference device (19) or by a reference reception element.

## Revendications

1. Capteur optoélectronique, comprenant
un étage émetteur (13) pour émettre un éclairage en forme de lignes en direction d'une zone-objet,
au moins un étage récepteur (17, 19) pour recevoir la lumière réfléchie ou réémise depuis la zone-objet et pour fournir au moins un signal de réception correspondant, et
un étage d'évaluation pour évaluer ledit au moins un signal de réception,
dans lequel il est prévu une subdivision de la zone-objet éclairée par des lignes en plusieurs segments de surveillance (29), et
dans lequel il est prévu un étage de mesure de distance, au moyen duquel il est possible de déterminer, pour chacun des plusieurs segments de surveillance (29), la distance à un objet (23, 25) qui s'y trouve,
**caractérisé en ce que**
pour la subdivision de la zone-objet éclairée par des lignes en formant les plusieurs segments de surveillance (29) et pour la détermination des informations de distance qui concernent un segment de surveillance respectif (29), l'étage émetteur comprend un élément émetteur associé (13) pour chacun des plusieurs segments de surveillance.

2. Capteur selon la revendication 1,
**caractérisé en ce que**
le lieu de focalisation d'une optique de réception et/ou d'une optique d'émission est réglable en fonction de la distance mesurée pour un segment de surveillance (29).

3. Capteur selon l'une des revendications précédentes,
**caractérisé en ce qu'**il est prévu un étage récepteur (19) additionnel pour recevoir la lumière réfléchie ou réémise depuis la zone-objet et pour délivrer au moins un signal de réception correspondant.

4. Capteur selon la revendication 3,
**caractérisé en ce qu'**il est prévu un subdiviseur de rayonnement (15) du côté réception, qui forme l'image d'une partie de la lumière réfléchie ou réémise depuis la zone-objet sur l'étage récepteur (17), et l'image d'une autre partie de la lumière sur l'étage récepteur additionnel (19).

5. Capteur selon l'une des revendications 3 ou 4,
**caractérisé en ce qu'**il est prévu un unique étage émetteur (13) pour émettre un éclairage en forme de lignes commun pour l'étage récepteur (17) et pour l'étage récepteur additionnel (19).

6. Capteur selon l'une des revendications 3 à 5,
**caractérisé en ce que** l'étage récepteur (17) est prévu pour la saisie d'images, et la distance est susceptible d'être déterminée à partir dudit au moins un signal de réception de l'étage récepteur additionnel (17).

7. Capteur selon l'une des revendications 3 à 6,
**caractérisé en ce que** l'étage récepteur additionnel (19) est réalisé avec résolution locale, en particulier avec plusieurs éléments récepteurs (21) qui sont respectivement associés aux segments de surveillance (29).

8. Capteur selon l'une des revendications 3 à 6,
**caractérisé en ce qu'**il est prévu une optique de réception astigmatique, et **en ce que** l'étage récepteur supplémentaire comprend un unique élément récepteur.

9. Capteur selon l'une des revendications précédentes,
**caractérisé en ce que** l'étage récepteur (19) est réalisé avec résolution locale, en particulier avec plusieurs éléments récepteurs qui sont respectivement associés aux segments de surveillance.

10. Capteur selon l'une des revendications précédentes,
**caractérisé en ce que** la détermination de distance pour les plusieurs segments de surveillance (29) est prévue en séquence ou en parallèle.

11. Capteur selon l'une des revendications précédentes,
**caractérisé en ce que** pour la détermination de distance, il est prévu une modulation en d'amplitude de l'étage émetteur ou d'éléments émetteurs individuels (13).

12. Capteur selon la revendication 11,
**caractérisé en ce qu'**il est prévu un composant de filtre pour former un circuit résonant conjointement avec l'étage émetteur (13) et avec l'étage récepteur ou respectivement l'étage récepteur additionnel (19), ou **en ce qu'**il est prévu un oscillateur et un comparateur de phase.

13. Capteur selon l'une des revendications précédentes,
**caractérisé en ce que** les segments de surveillance (29) sont agencés au voisinage les uns des autres perpendiculairement à l'axe optique de l'étage émetteur (13), en particulier séparés les uns des autres, adjacents les uns aux autres, ou en chevauchement.

14. Capteur selon l'une des revendications précédentes,
**caractérisé en ce que** les segments de surveillance (29) possèdent une forme allongée à l'intérieur d'un plan perpendiculaire à l'axe optique de l'étage émetteur (13), et **en ce que** les segments de surveillance (29) sont agencés au voisinage les uns des autres, de préférence le long de leur forme allongée.

15. Capteur selon l'une des revendications précédentes,
**caractérisé en ce que** le dispositif d'évaluation est réalisé pour calculer une information d'image à partir des signaux de réception correspondants aux segments de surveillance (29), et/ou
**en ce que** le dispositif d'évaluation est réalisé pour calculer ou pour estimer le volume d'un objet (25) qui se trouve dans la zone-objet à partir des signaux de réception correspondant aux segments de surveillance (29).

16. Capteur selon l'une des revendications précédentes,
**caractérisé en ce qu'**il est prévu une subdivision de la zone-objet éclairée par des lignes en une pluralité de segments de surveillance (29), en particulier en au moins trois segments de surveillance (29).

17. Capteur selon l'une des revendications précédentes,
**caractérisé en ce que** l'étage émetteur (13) comprend un élément émetteur au moyen duquel un rayon de lumière émise peut être émis en direction d'un objet de référence à l'intérieur du capteur, et dans lequel au moyen de l'étage récepteur (17), ou de l'étage récepteur additionnel (19), ou encore d'un élément récepteur de référence, un signal de référence peut être généré en fonction de la lumière réfléchie ou réémise depuis l'objet de référence.
